# EUROPEAN PATENT SPECIFICATION

(11) **EP 3 727 646 B1**
(45) Date of publication and mention of the grant of the patent: **24.05.2023**
(21) Application number: 18830386.1
(22) Date of filing: 14.12.2018
(51) Int. Cl.: B01D 53/00, B01D 53/14, B01D 53/34, B01D 53/52, B01D 53/73, C01B 17/04, F25J 3/04

(54) **GAS TREATMENT METHOD INCLUDING AN OXIDATIVE PROCESS PROVIDING WASTE HEAT AND CORRESPONDING APPARATUS**
VERFAHREN ZUR GASBEHANDLUNG MIT EINEM OXIDATIVEN PROZESS, DER ABWÄRME LIEFERT, UND ENTSPRECHENDE VORRICHTUNG
PROCÉDÉ DE TRAITEMENT DE GAZ COMPRENANT UN PROCESSUS OXYDATIF FOURNISSANT DE LA CHALEUR PERDUE ET APPAREIL CORRESPONDANT

(30) Priority: 19.12.2017 EP 17020584
(43) Date of publication of application: 28.10.2020
(73) Proprietor: Linde GmbH, 82049 Pullach (DE); WorleyParsons Group Inc., Monrovia, California 91016 (US)
(72) Inventor: GUZMANN, Marcus, 82541 Münsing (DE); POLLITT, Steve, Cuffley, Hertfordshire EN6 4EJ (GB)
(74) Representative: Imhof, Dietmar
(86) International application number: PCT/EP2018/025321
(87) International publication number: WO 2019/120619

(56) References cited:
- US-A- 4 684 514
- US-A- 5 635 541
- US-A1- 2013 071 308
- Georg Hammer ET AL: "Natural Gas" In: "Ullmann's Encyclopedia of Industrial Chemistry", 15 July 2006 (2006-07-15), Wiley-VCH Verlag, Weinheim, XP055183954, ISBN: 978-3-52-730673-2 DOI: 10.1002/14356007.a17_073.pub2, cited in the application Chapter 2.9. "Example of an Integrated Plant"; page 746 - page 766; figure 19

## Description

The present invention relates to a gas treatment method including an oxidative process providing waste heat and to corresponding apparatus according to the precharacterising clauses of the independent claims.

### Prior art

Methods and apparatus for treating sour gas mixtures based on the Claus process are known from the prior art. Reference is e.g. made to the article "Natural Gas" in Ullmann's Encyclopaedia of Industrial Chemistry, on-line publication 15 July 2006, DOI: 10.1002/14356007.a17_073.pub2, especially chapter 2.4, "Removal of Carbon Dioxide and Sulphur Components."

US 4,684,514 A discloses a method of recovering sulfur from a hydrogen sulphide-containing gas stream which removes water concurrently with the condensation of sulphur and which can be operated at high pressure.

US 2013/0071308 A1 relates to a method and a plant for recovering sulphur from a sour gas containing hydrogen sulphide and carbon dioxide, comprising oxidation of the sour gas, wherein a part of the hydrogen sulphide is oxidised to sulphur dioxide and water, reaction of the resulting sulphur dioxide with the residual hydrogen sulphide to elementary sulphur, and removal of elementary sulphur. Carbon dioxide and/or carbon dioxide generated by oxidation of the sour gas is compressed, and at least a part of the carbon dioxide is injected into an oil well.

US 5,635,541 A discloses that natural gas may be partially oxidized to produce a synthesis gas comprising carbon monoxide and hydrogen, wherein the synthesis gas is catalytically reacted to produce higher molecular weight hydrocarbon products, wherein the conversion process generates excess steam and wherein oxygen used to partially oxidize the natural gas is produced by an air separation process.

The Claus process originally only mixed hydrogen sulphide or a corresponding sour gas mixture with oxygen and passed the mixture across a pre-heated catalyst bed. It was later modified to include a free-flame oxidation upstream the catalyst bed in a so-called Claus furnace. Most of the sulphur recovery units (SRU) in use today operate on the basis of a correspondingly modified process. If, in the following, therefore, shorthand reference is made to a "Claus process" or a corresponding apparatus, this is intended to refer to a free-flame modified Claus process as just described.

So-called oxygen enrichment is a well-known economic and reliable method of debottlenecking existing Claus sulphur recovery units with minimal capital investment. Oxygen enrichment is, however, as described in detail below, not limited to retrofitting existing Claus sulphur recovery units but can likewise be advantageous in newly designed plants. The "term oxygen enrichment" shall, in the following, refer to any method wherein, in a Claus sulphur recovery unit or in a corresponding method, at least a part of the air introduced into the Claus furnace is substituted by oxygen or a by gas mixture which is, as compared to ambient air, enriched in oxygen or, more generally, has a higher oxygen content than ambient air.

Oxygen or oxygen enriched gas mixtures for Claus sulphur recovery units can be, in general, provided by cryogenic air separation methods and corresponding air separation units (ASU) as known from the prior art, see e.g. Haering, H.-W., "Industrial Gases Processing," Wiley-VCH, 2008, especially chapter 2.2.5, "Cryogenic Rectification." Cryogenic air separation units typically comprise a so-called warm section configured for compression, pre-cooling, drying and pre-purification of feed air, and a so-called cold section configured for heat exchange and rectification.

While the present invention is, in the following, described with a focus on cryogenic air separation, it can likewise be used with advantage with non-cryogenic air separation methods and units, e.g. based on pressure swing adsorption (PSA), particularly with desorption pressure levels below atmospheric pressure (Vacuum PSA, VPSA). This is the case if such methods or units operate using rotable equipment which is driven or drivable by using steam, particularly a steam turbine.

The present invention is also not limited to the Claus process but can equally be used in other gas treatment methods including an oxidative process providing waste heat, provided that oxygen, e.g. pure oxygen or oxygen contained in a component mixture which is enriched in oxygen, is at least temporarily provided by an air separation unit of the kind mentioned, particularly when less of the waste heat, or no waste heat, is provided in a start-up operation of such a process.

An object of the present invention is to provide improved methods of this kind, particularly in view of reducing capital and operating expenses.

### Disclosure of the invention

In view of the above, the present invention provides a gas treatment method including an oxidative process providing waste heat and a corresponding apparatus including the features of the independent claims, respectively. Advantageous embodiments are the subject of the dependent claims and of the description that follows.

Before specifically referring to the features and advantages of the present invention, some terms used herein will be defined and briefly explained. Furthermore, the operating principle of a Claus sulphur removal unit will be further explained. While, in the following, the present invention and its technical background is described with a focus on the Claus process, the present invention can equally be used in other gas treatment methods including an oxidative process providing waste heat.

In the language as used herein, a mixture of components, e.g. a gas mixture, may be rich or poor in one or more components, where the term "rich" may stand for a content of more than 75%, 80%, 85%, 90%, 95%, 99%, 99.5% or 99.9% and the term "poor" for a content of less than 25%, 20%, 15%, 10%, 5%, 1%, 0.5% or 0.1 %, on a molar, weight or volume basis. In the field of sour gas treatment, a sour gas mixture with a hydrogen sulphide content of more than 80% is generally referred to as "rich" while a sour gas mixture containing less hydrogen sulphide is generally referred to as "lean." A mixture may also be, in the language as used herein, enriched or depleted in one or more components, especially when compared to another mixture, where "enriched" may stand for at least 1, 5 times, 2 times, 3 times, 5 times, 10 times or 100 times of the content in the other mixture and "depleted" for at most 0.75 times, 0.5 times, 0.25 times, 0.1 times, or 0.01 times of the content in the other mixture.

The term "sour gas mixture" refers, in the language as used herin, to a gas mixture containing hydrogen sulphide and carbon dioxide in a common amount of at least 50%, 75%, 80% or 90% by volume. Further components may be present in a sour gas mixture as well, particularly water, hydrocarbons, benzene, toluene and xylenes (BTX), carbon monoxide, hydrogen, ammonia and mercaptans.

The terms "pressure level" and "temperature level" are used herein in order to express that no exact pressures but pressure ranges can be used in order to realize the invention and advantageous embodiments thereof. Different pressure and temperature levels may lie in distinctive ranges or in ranges overlapping each other. They also cover expected and unexpected, particularly unintentional, pressure or temperature changes, e.g. inevitable pressure or temperature losses. Values expressed for pressure levels in bar units are absolute pressure values.

Compressors for use in air separation units, be it of the cryogenic or the non-cryogenic type, can be designed as turbo or positive displacement machines, the two types differing in their operational behaviour. With turbo machines, the amount of compressed gas decreases with increasing pressure, while in positive displacement machines nearly a constant mass flow independently from the discharge pressure of the compressor can be achieved. Multiple-stage turbo compressors are by far the most frequently used machines in cryogenic air separation. Turbo compressors can be of the radial or the axial type. They differ from each other in the direction by which the compressed gas leaves the impeller. A radial turbo compressor is made up of several stages which are arranged on one or more shafts. These shafts are driven via a gear either by an electric motor or a steam turbine. Air compressed in a main air compressor (MAC), e.g. of the turbo type, of an air separation unit is heated by the compression typically to about 100 °C and is therefore, prior to being cooled via a heat exchange with air separation products, typically pre-cooled with water.

If, in the following, the term "main air compressor" is used, this term is intended to refer to that compressor or these compressors of a cryogenic or non-cryogenic air separation unit which compress(es) all the air to be separated to a certain pressure level. A main air compressor may be followed by a booster air compressor (BAC) or several boosters driven by turbines. The latter machines, however, are only used for parts of the air previously compressed by the main air compressor. Herein, a main air compressor and a booster air compressor are to be understood as machines entirely or at least partially driven by external energy, the term "external energy" referring to energy which was not obtained by expanding process streams formed in the air separation unit itself using e.g. turboexpanders.

In classical cryogenic air separation units as shown in Figure 2.3A in Haering, all the feed air into the rectification column system is compressed to a pressure at or slightly above the operating pressure of the high pressure column in the main air compressor, and only a part of the air such compressed is further compressed to a higher pressure in a so-called booster air compressor. Such classical configurations are often also referred to as "MAC/BAC" configurations. In contrast, in more recent so-called "high air pressure" ("HAP") configurations, all the feed air is compressed in the main air compressor to a pressure significantly, i.e. at least 2, 3, 4, 5 or 10 bar, and up to 20 bar or more, above the operating pressure of the high pressure column. This does, however, not exclude that parts of the air such compressed are further compressed in booster air compressors or other further machines. High air pressure configurations are known from EP 2 466 236 A1, EP 2 458 311 A1 and US 5,329,776 A.

A sour gas mixture used as a feed for a Claus sulphur recovery unit usually originates from an sour gas sweetening plant, e.g for natural gas or a gas from a petrochemical or oil refinery plant. The sour gas mixture, containing varying amounts of hydrogen sulphide and carbon dioxide, is saturated with water and frequently also contains small amounts of hydrocarbons and other impurities in addition to the principal components. In a typical Claus sulphur recovery unit, the sour gas mixture enters at about 0.5 barg or about 0.8 barg and 50 °C. In classical Claus sulphur recovery units, combustion air is compressed to an equivalent pressure by centrifugal blowers. Both inlet streams then flow to a burner which fires into the Claus furnace, the burner being fed with a further fuel.

The gas mixture from the Claus furnace, at a temperature of typically up to 1,400 °C, is typically cooled while generating steam in a waste heat boiler and further cooled while producing low-pressure steam in a separate heat exchanger. This cools the hot gases to approximately 160 °C, condensing most of the sulphur which has already formed up to this point. The resultant liquid sulphur is removed in a separator section of the condenser and flows by gravity to a sulphur storage tank. Here it is kept molten, at approximately 140 °C, by steam coils. Sulphur accumulated in this reservoir is pumped to trucks or rail cars for shipment.

Any further conversion of the sulphur gases still contained in the gas mixture from the Claus furnace must be done by catalytic reaction. The gas mixture is therefore reheated by one of several means and is then introduced to the catalyst bed. The catalytic Claus reaction releases more energy and converts more than half of the remaining sulphur gases to sulphur vapour. This vapour is condensed while generating low-pressure steam and is removed from the gas mixture. The remaining gas mixture is reheated and enters the next catalytic bed. This cycle of reheating, catalytic conversion and sulphur condensation is repeated in two to four catalytic steps. A typical Claus sulphur recovery unit comprises one free-flame reaction stage, i.e. one furnace, and three catalytic reaction stages. Each reaction step converts a smaller fraction of the remaining sulphur gases to sulphur vapour.

If a three-stage or four-stage sulphur recovery unit cannot meet the required emission levels in the gas mixture obtained after the last catalytic reaction stage, i.e. in the so-called tail gas, further processing is required. This involves a so-called tail gas treatment unit (TGTU), which generally can be configured to perform dry bed processes and wet scrubbing processes. Wet scrubbing processes, such as the BSR/amine process of WorleyParsons include a front-end section to convert all of the sulphur compounds still contained in the tail gas back into hydrogen sulphide. After cooling, the hydrogen sulphide-containing tail gas is contacted with a solvent to remove the hydrogen sulphide, much like in a conventional gas treating plant. The solvent is then regenerated to strip out the hydrogen sulphide, which is then recycled to the upstream Claus sulphur removal unit for subsequent conversion and recovery.

So-called oxygen enrichment is, as mentioned, a well-known economic and reliable method of debottlenecking existing Claus sulphur recovery units with minimal capital investment. It can also eliminate the need for fuel gas co-firing in the reaction furnace, required to maintain the correct temperature for contaminant destruction, for example for destruction of benzene, toluene and xylenes in the acid gas mixture. Generally, higher temperatures are required to maintain a stable flame (above about 1.000 °C) and even highter temperatures are required to destroy BTX and/or ammonia (present in refinery sour water stripper gas). Whether or not a corresponding co-firing is required particularly depends on the hydrogen sulphide content of the sour gas mixture treated and whether a sufficient temperature and a stable flame can be obtained by burning the sour gas mixture alone.

The concept of oxygen enrichment entails replacing part or all of the air fed to the Claus furnace by enriched air or pure oxygen. Correspondingly, the volumetric flow through the Claus sulphur recovery unit decreases, allowing more of the acid gas mixture to be fed to the system. This results in an increased sulphur production capacity without the need for significant modifications to existing equipment or major changes to the process plant pressure profile.

The application of oxygen enrichment is not limited to retrofitting or debottlenecking existing Claus sulphur recovery units, but can also have advantages in newly designed plants where the acid gas mixtures obtained are lean and contain benzene, toluene and xylenes. Such plants classically require feed gas and/or combustion air preheating and the use of fuel gas co-firing and have not, historically, been considered for oxygen enriched operation. However, also in such plants, the use of oxygen enriched technology results in a reduction in the physical size of all major equipment items and an associated, significant reduction in capital cost. Particularly, a large reduction in fuel requirements in co-firing in the Claus furnace and other units can be achieved and therefore more fuel, e.g. natural gas, can be used for other purposes or provided as a product of the whole plant.

A particular advantage of oxygen enrichment is, furthermore, that the tail gas downstream a tail gas treatment unit is less "diluted" with nitrogen from the combustion air classically used. If little or no additional nitrogen is introduced into the process, the main component of the sour gas mixture after desulphurisation, i.e. carbon dioxide, and other components like hydrogen can be obtained in a simpler and more cost-effective way, e.g. by cryogenic technology alone and without energy-intensive wet technology.

Air separation units, irrespective whether they are based on cryogenic processes or adsorption processes, require compressors in order to process the air being used as feedstock. Claus sulphur removal units conventionally are operated by introducing ambient air through blowers into the Claus furnace in order to introduce the oxygen contained in ambient air as reaction component. An improved method is, as mentioned, an oxygen enriched operation wherein, at least a part of ambient air is exchanged for pure oxygen or a gas mixture which has a higher oxygen content than that of ambient air. For example, pure oxygen or an oxygen enriched gas mixture can be mixed into an air flow blown into the Claus furnace by a blower, in which case the amount of air is reduced correspondingly, in order to maintain a defined mass flow. Alternatively, a blower is no longer used for introducing air to the Claus furnace and only oxygen or an oxygen enriched gas mixture can be used in order to provide oxygen for burning. In this case, the blower for the main air to the Claus furnace is eliminated. The much smaller air blowers for a reducing gas generator and a tail gas incinerator (if present, respectively) can be further reduced in size.

Particularly in the latter case, a blower is not at all required during normal operation of the Claus furnace. Also in the former case, however, during normal operation less air has to be introduced into the Claus furnace, resulting in a smaller capacity demand for the blower. However, during start-up of the process, a blower may still technically be required because the process is started up with ambient air and then gradually boosted by oxygen enrichment up to the desired level, e.g. up to 100% or at least 100% oxygen. Particularly, a corresponding plant must be warmed up before the main burner is ignited, in order to avoid thermal shock etc. In order to do this, fuel gas will be burned with air (introduced with a blower) in the Claus furnace at start up. Further, the introduced air, fuel gas and/or sour gas could be pre-heated using heat exchangers applying steam.

In other words, during the operation of an oxygen enriched Claus sulphur removal process ("oxygen enriched," as mentioned, also referring to an operation with pure oxygen), the blower capacity could be significantly reduced or the blower could entirely be dispensed with. However, for the start-up of the Claus sulphur removal unit, ambient air is still required and as such a blower can be installed.

The air separation unit used in the present invention is dedicated to supply the oxygen to the Claus sulphur removal unit with the objective to operate the Claus sulphur removal unit on an oxygen enriched air or 100% oxygen basis. However, during the start-up of the Claus sulphur removal unit, no oxygen is required because, as mentioned, the oxygen content of the feed into the Claus sulphur removal unit will be gradually increased. During this period, the main air compressor being required for the air separation unit can be used, according to the present invention, to provide the air flow into the Claus unit. The required air pressure level for the feed into the Claus sulphur removal unit, here referred to as feed pressure level, is between 0,5 to 3,5 barg (bar gauge pressure).

The air separation can be turned off at this stage of Claus sulphur removal unit startup or could be run in a turndown mode. While the oxygen enrichment level into the Claus sulphur removal unit is gradually increased, the air volume required by the Claus sulphur removal unit may accordingly be reduced gradually. Therefore, the main air compressor can provide a gradually increasing air volume to the air separation process which in turn can provide gradually increasing amounts of air separation products. Generally, an "air separation product" refers to any fluid which can be obtained by cryogenic or non-cryogenic air separation, which contains one or more components of ambient air in a higher or lower content than ambient air, i.e. which is enriched or depleted in the meaning above. Particularly, an air separation product as used in the context of the present invention is an oxgen rich or oxygen enriched air separation product or (essentially) pure oxygen.

### Advantages of the invention

As mentioned before, the present invention is of particular advantage in connection with sour gas treatment involving the Claus process, but equally suitable for other processes of the kind mentioned.

Gas processing plants and methods processing, particularly for treating sour natural gas, are rather complex and typically utilize various processing units such as e.g. acid gas removal units (e.g. so-called amine units in which an amine scrubbing is performed, as explained below), natural gas processing facilities (e.g. for so-called dewpointing or dehydration), sulphur removal units and tail gas treatment units as explained above. In such plants and methods, air separation units can be used to provide both oxygen (e.g. for oxygen-enriched Claus processes as also explained above) and nitrogen for purging and blanketing. As to further details, reference is also made to the expert literature cited in the outset.

Processes applied in such integrated processing plants and methods comprise sequential start-ups of the various processing units. Particularly if in one or some of these units waste-heat is produced, e.g. in a Claus process heat contained in the gas mixture processed in the Claus furnace, steam can be generated as a by-product, and this steam can be applied in another integrated units, i.e. steam consumers. Problems arise, in this context, if waste-heat generating units are or can be started up only after the steam consumers are started up and require steam for their functioning already. In corresponding integrated processes, a sulphur removal unit operating on the basis of the Claus process can be considered as steam exporter (in e.g. a refinery or gas processing plant) and this serves other processing units with steam during normal operation. However, such steam is not yet available during start-up.

Steam produced using waste-heat of the Claus process can e.g. be applied in an amine unit for the regeneration of the amine solvent. A typical amine gas treating process includes an absorber unit and a regenerator unit as well as accessory equipment. In the absorber unit, a downflowing amine solution absorbs hydrogen sulphide and carbon dioxide from an upflowing gas mixture, e.g. sour natural gas, to produce a "sweetened" gas stream (i.e., natural gas free of hydrogen sulphide and carbon dioxide) as a product and an amine solution rich in the absorbed acid gases. The resultant "rich" amine is then routed into the regenerator unit representing a stripper with a reboiler to produce regenerated or "lean" amine that is recycled for reuse in the absorber unit. The stripped gas mixture from the regenerator unit is enriched or rich in hydrogen sulphide and carbon dioxide. It represents a sour gas mixture which can be treated in the Claus process. Particularly the reboiler of the regenerator unit of the amine unit can be operated with steam produced using waste heat of the Claus process.

However, it will be understood that an amine unit, producing a sour gas which is to be treated in the Claus process, and thus supplying the gas to be treated to the Claus process, must be started up before the Claus process. However, at the time of the start-up of the amine unit, no waste heat thereof is yet available. This problem is also present if other units in a corresponding integrated plant or method require steam, e.g. for heating purposes, which is not yet available at start-up.

A tail gas treatment unit can generally represent a steam consumer, wherein particularly during pre-heating and during start-up steam is required. Typically, by using waste heat from the Claus process, high and low pressure steam are produced. The tail gas treatment unit typically imports low pressure steam. Therefore, further steam can be produced and used for other purposes. In the BSR/amine tail gas treatment technology mentioned above, a primary steam use is present in reboiling the amine solvent in the solvent regenerator, as mentioned. Additionally, steam can be used to heat the tail gas to reaction temperature before it is introduced into the hydrogenation reactor. (The latter can also be achieved by burning fuel gas in a "reducing gas generator", RGG).

In integrated plants and methods of the kind described, conventionally therefore, a dedicated steam plant including a steam boiler which is typically fired by gas or oil is used which temporarily is producing steam to serve the consumers during the start-up phase of the plant, if no waste heat is yet available. Once the complex including the sulphur recovery unit is fully started up, the steam balance is reached and as such the steam boiler can be turned off as sufficient steam can be provided using waste heat from the sulphur recovery unit. The dedicated steam plant or boiler is therefore only utilized temporarily and as such heavily underutilized.

The present invention now proposes to use, in the start-up phase, instead of steam from a dedicated steam plant or boiler, steam which is provided in a further steam plant or boiler which is used for driving one or more compressors, particularly the main air compressor, in an air separation unit which is also part of the integrated plant or method. The air separation unit may, as mentioned in the outset, be a cryogenic or non-cryogenic air separation unit comprising a corresponding compressor. The steam plant or boiler associated with the air separation unit is, according to the invention, started up first to supply other gas processing units like the amine unit temporarily with steam during their start up, while no waste heat is yet available from e.g. the Claus process. When the latter is readily started up and beginning to export steam, the steam boiler will start to serve steam to start up and later continuous operations of the air separation unit instead. These inventive concepts can obviously be transferred to other oxidative processes as well.

The present invention is particularly advantageous in connection with oxygen-enriched Claus processes because such processes are, as mentioned, typically started up with ambient air and then gradually boosted by oxygen enrichment up to the desired level of e.g. up to 250% by oxygen enrichment of up to 100% oxygen. This staged start-up could be e.g. done to heat up the process equipment and to avoid thermal shock. Therefore, when starting up the Claus process, oxygen or oxygen enriched air from the air separation unit is not yet required in the Claus process and the compressor(s) of the air separation unit are not yet needed. A steam plant or boiler for supplying steam to the compressor(s) of the air separation unit can instead be used to supply steam to further gas treatment units as mentioned. However, already from start-up of the Claus process, also if this is still supplied with ambient air, waste heat is present. As mentioned, in order to do avoid thermal shock, fuel gas will be burned with air in the Claus furnace at start-up.

In other words, according to the present invention, an oxidative process providing waste heat is integrated with a steam driven air separation unit and a steam generator, wherein the steam generator is temporarily producing steam for other units when the sulphur removal unit is not operating or has not been started up yet (and thus is not producing steam). When the sulphur removal unit and its associated steam generator then is started up and exports steam, the dedicated steam generator is applied to start up and drive the air separation unit, wherein the air separation unit is producing oxygen that is applied in the sulphur removal unit for an oxygen enriched or oxygen fuelled Claus process.

In view of the aspects discussed above, the present invention provides a gas treatment method including an oxidative process providing waste heat, wherein a first gas mixture containing an oxidable component is provided, wherein the first gas mixture and oxygen are introduced into a oxidating unit, wherein at least a part of the oxidable component in the first gas mixture is oxidised in the oxidating unit, wherein the first gas mixture and/or a second gas mixture used in providing the first gas mixture and/or a third gas mixture produced from at least a part of the first gas mixture using the oxidating unit is or are treated in one or more gas treatment units operated using a first amount of steam. According to the invention, a first mode of operation and a second mode of operation is provided, wherein the second mode of operation is a start-up mode and the first mode of operation is a regular mode of operation performed in a time period after the second mode of operation. The oxidative process providing waste heat is in operation and provides waste heat in a first waste heat amount in the first mode of operation and the oxidative process is not in operation or is in operation and is providing waste heat in a second waste heat amount smaller than the first waste heat amount in the second mode of operation.

In the first mode of operation, the oxygen introduced into the oxidating unit is at least in part provided in the form or oxygen contained in an air separation product by an air separation unit. The air separation product is pure oxygen or a mixture of components enriched in oxygen as compared to atmospheric air. A first amount of the air separation product is produced by the air separation unit in the first mode of operation, and a second amount of the air separation product smaller than the first amount of the air separation product or none of the air separation product is produced by the air separation unit in the second mode of operation. The air separation unit is characterized by comprising a compressor operated using a second amount of steam. In the first mode of operation the first amount of steam is provided by a first steam generator operated using at least a part of the waste heat, and in the first mode of operation the second amount of steam is provided by a second steam generator independently operable from the waste heat.

The second gas mixture particularly may be a lean sour gas mixture, i.e. a sour gas mixture containing less than 80%, less than 60% or less than 50% and more than 10%, more than 20%, more than 30% or more than 40% of hydrogen sulphide. The present invention is particularly advantageous in this context, because lean sour gas mixtures comprise less oxidable components and therefore waste heat is produced to a smaller extent than in the case of rich sour gas mixtures. Therefore, a careful waste heat management is important.

According to the present invention, said operating the compressor using the second amount of steam comprises expanding the second amount of steam in a steam turbine which is mechanically coupled to the compressor. This means that a direct transfer of rotational energy output by the steam turbine to the compressor is present, according to the present invention. A mechanical coupling as used according to the present invention may include a coupling including equal speeds of a driving shaft of the steam turbine and a driven shaft of the compressor, or a coupling via a transmission or gearbox resulting in fixed or variable speed differences. A mechanical coupling does not comprise, according to the present invention, an indirect coupling in which, for example, rotational energy from the steam turbine is converted to a different form of energy like electrical energy and wherein the different form of energy is converted to rotational energy in order to drive the compressor. A mechanical coupling, which is provided according to the present invention, eliminates energy conversion losses otherwise present.

As mentioned, operating the compressor using the second amount of steam comprises expanding the second amount of steam in a steam turbine which is mechanically coupled to the compressor. However, this does not exclude that operating the compressor may also comprise using supplementary energy which is not provided in the form of steam expanded in the steam turbine.

According to the present invention, in the second mode of operation at least a part of the first amount of steam provided by the first steam generator in the first mode of operation is instead provided by the second steam generator, and in particular a total amount of steam smaller than the second amount of steam, or no steam, is provided by the first steam generator. In other words, the second steam generator, which is in the first mode of operation used to drive the compressor of the air separation unit, is in the second mode used to operate the at least one gas treatment unit.

Particular advantages and further features of the method according to the present invention have already been discussed before. Particularly, through the integration of an oxidative process, e.g. the Claus process, the capital expenses (CAPEX) and also the operating expenses (OPEX, especially repair and maintenance cost) for the overall process can be reduced, as an additional (only temporarily used) steam boiler is avoided. Furthermore, the start-up of a corresponding method is simplified as due to less equipmenmt a reduced schedule is possible. Furthermore, according to the present invention, less plot space is required. Steam-driven air separation units are, furthermore, usually more cost efficient considering the total cost of ownership. As such the overall economics of an oxygen-enriched Clauss process are improved.

It is generally not excluded that waste heat is also generated in the second mode of operation. However, as mentioned, the waste heat amount is at least smaller in the second mode of operation.

As also discussed before, the present invention advantageously is used in connection with the Claus process and a corresponding gas treatment. Therefore, advantageously, the first gas mixture is a sour gas mixture, the oxidable component is hydrogen sulphide, the oxidative process is a Claus process, the oxidating unit is a Claus furnace, and a part of the hydrogen sulphide in the sour gas mixture is oxidized by free-flame oxidation in the Claus furnace. For particular advantages, also for this preferred embodiment reference is made to the explanations above.

The air separation unit can provide, as also mentioned, oxygen or oxygen enriched air to the Claus process or its furnace or to another oxidative process. A method according to the present invention therefore includes, as mentioned, that the oxygen provided by the air separation unit is oxygen contained in an air separation product, wherein the air separation product is pure oxygen or a mixture of components enriched in oxygen as compared to atmospheric air.

Generally, the air separation product has an oxygen content higher than that of ambient air. It may comprise at least 30%, 40%, 50%, 60%, 70%, 80%, 90% or 95% oxygen by volume. In other words, different levels of oxygen enrichment are possible. Also, essentially pure oxygen may be used. The air separation unit may also provide partly enriched oxygen products depending on the specific requirements of the Claus sulphur removal unit, and thus the energy consumption of the air separation unit can be optimized accordingly. Particularly, a cryogenic air separation unit including a mixing column can be used for this purpose, as e.g. described in EP 3 179 187 A1 and the references cited therein.

As mentioned before as well, a first amount of the air separation product is produced by the air separation unit in the first mode of operation, and a second amount of the air separation product smaller than the first air separation product or none of the air separation product is produced by the air separation unit in the second mode of operation. In other words, during start-up of the inventive method, operation of the air separation unit can be fully or partially suspended.

According to a particularly preferred embodiment, a third amount of the air separation product smaller than the first amount of the air separation product is introduced into the Claus furnace in the first mode of operation, and a fourth amount of the air separation product is stored in the first mode of operation and is at least in part introduced into the Claus furnace in the second mode of operation. In other words, also in the start-up mode, oxygen or oxygen-enriched air may be supplied to the oxidative process from oxygen or oxygen-enriched air which is produced in the normal operation mode and is e.g. stored in a back-up tank. In this case, particularly liquid oxygen can be used. This provides the benefit that already during start-up, already at least some oxygen-enrichment can be performed.

Generally, e.g. a Claus furnace temperature in the sulphur recovery unit can, according to the present invention, be further increased by using additional oxygen and as such a larger steam quantity can be exported. As such, the overall steam balance can be optimized. In case this additional steam produced by the delta of a conventional air based Claus process process and the oxygen-enriched process is not utilized by the other process units, this excess steam could be utilized to run the steam drives of the air separation unit, at least partially. This means from an operational perspective that during the start-up phase of the sulphur recovery unit the air separation may be run on less steam (produced from or independently from waste heat) in a turn down mode first. When increased steam is available from the sulfur recovery unit (due to oxygen enrichment) the air separation unit can be operated at 100%. As such a steam boiler size could be optimized.

As mentioned, the first amount of steam can be used to operate one or more gas treatment units treating the first gas mixture and/or a second gas mixture used in providing the first gas mixture and/or a third gas mixture produced from at least a part of the first gas mixture using the oxidating unit. The third gas mixture can be treated in a tail gas treatment unit, as mentioned. As explained in more detail above, a tail gas treatment unit generally represents a steam consumer. Therefore, the tail gas treatment unit can be operated using the first amount of steam or a part thereof.

Particularly, heat of the first amount of steam or a part thereof can be used to heat the tail gas to reaction temperature before it is introduced into hydrogenation reactor in the tail gas treatment unit, or a loaded amine solution can be regenerated using heat from the first amount of steam or a part thereof. For further details, reference is made to the explanations above.

As mentioned, the present invention can also be used with an amine unit as explained above in order to treat a second gas mixture used in order to produce the first gas mixture. As also mentioned, also a tail gas treatment unit adapted to treat the third gas mixture or a part thereof can comprise an amine unit. In other words, advantageously the second gas mixture used in providing the first gas mixture and/or the third gas mixture produced from at least a part of the first gas mixture is treated in the or one of the gas treatment units, wherein the second and/or the third gas mixture is a gas mixture containing hydrogen sulphide and carbon dioxide, wherein the gas treatment unit or the one of the gas treatment units comprises an amine unit (or amine wash unit), wherein in the amine unit hydrogen suphilde and carbon dioxide are at least partially eliminated from the second and/or the third gas mixture using an amine solution and forming an amine solution loaded with hydrogen sulphide and carbon dioxide, and wherein the hydrogen sulphide and the carbon dioxide are at least in part stripped from the loaded amine solution using heat from the first amount of steam or a part thereof. Particularly, two gas treatment units, each including an amine unit, can be provided in order to treat the second or the third gas mixture, respectively.

The present invention also relates to an apparatus for performing a gas treatment method including an oxidative process providing waste heat, comprising means adapted to provide a first gas mixture containing an oxidable component, an oxidating unit adapted to oxidise at least a part of the oxidable component in the first gas mixture, means adapted to introduce the first gas mixture and oxygen into the oxidating unit, one or more gas treatment units adapted to treat, using a first amount of steam, the first gas mixture and/or a second gas mixture used in providing the first gas mixture and/or a third gas mixture produced from at least a part of the first gas mixture using the oxidating unit. The apparatus is adapted to perform a first mode of operation and a second mode of operation, the second mode of operation being a start-up mode and the first mode of operation being a regular mode of operation performed in a time period after the second mode of operation, the oxidative process providing waste heat being in operation and providing waste heat in a first waste heat amount in the first mode of operation and the oxidative process being not in operation or being in operation and providing waste heat in a second waste heat amount smaller than the first waste heat amount in the second mode of operation.

Further according to the present invention, an air separation unit is provided and is adapted to provide in the mode of operation at least a part of the oxygen introduced into the oxidating unit in the form of oxygen contained in an air separation product, the air separation product being pure oxygen or a mixture of components enriched in oxygen as compared to atmospheric air. The air separation unit is also adapted to produce a first amount of the air separation product in the first mode of operation, and a second amount of the air separation product smaller than the first amount of the air separation product or none of the air separation product in the second mode of operation. Furthermore, the air separation unit comprises a compressor adapted to be operated using a second amount of steam being expanded in a steam turbine mechanically coupled to the compressor, a first steam generator being provided and being adapted to be operated using at least a part of the waste heat and to provide the first amount of steam in the first mode of operation, and a second steam generator being provided and being adapted to be independently operable from the waste heat and adapted to provide the second amount of steam in the first mode of operation.

According to the present invention, at least a part of the first amount of steam provided by the first steam generator in the first mode of operation is instead provided by the second steam generator, and in particular a total amount of steam smaller than the second amount of steam, or no steam, is provided by the first steam generator.

Particularly, the first gas mixture is a sour gas mixture, the oxidable component is hydrogen sulphide, the oxidative process is a Claus process, the oxidating unit is a Claus furnace, and a part of the hydrogen sulphide in the sour gas mixture is oxidized by free-flame oxidation in the Claus furnace.

As to specific further features and embodiments of such an apparatus, reference is made to the explanations above relating to the method according to the invention and its advantageous embodiments. This equally applies for a corresponding apparatus which is adapted to perform a corresponding method or one of its embodiments.

The present invention will further be described with reference to the appended drawings which relate to a preferred embodiment of the present invention.

### Short description of the drawings

Figure 1 schematically illustrates a gas treatment method including an oxidative process providing waste heat in general.
Figure 2A schematically illustrates a gas treatment method including an oxidative process providing waste heat according to an embodiment of the present invention in a first mode of operation.
Figure 2B schematically illustrates the gas treatment method according to Figure 2A in a second mode of operation.

### Detailed description of the drawings

In the Figures, functionally or technically identical or equivalent components are indicated with like reference numerals and not repeatedly explained for sake of conciseness. If explanations with regard to methods are given, these relate to the corresponding apparatus in the same manner.

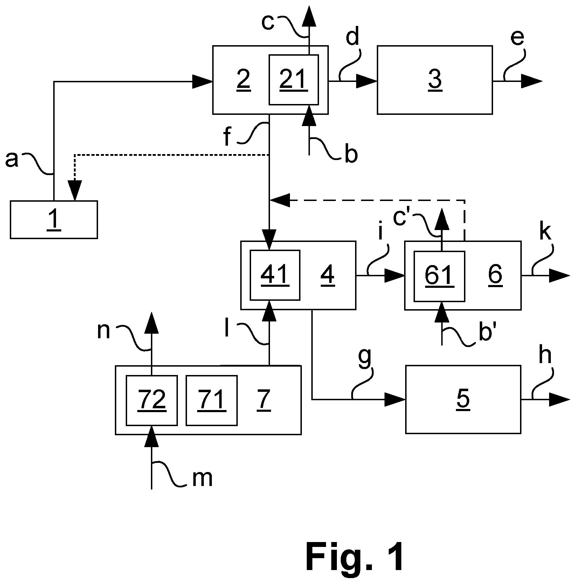

Figure 1 schematically illustrates a gas treatment method including an oxidative process 4 providing waste heat in general. The process is illustrated to include a Claus process as the oxidative process 4. However, as repeatedly mentioned, also other oxidative processes 4 can be used in the context of the present invention.

A sour natural gas stream a from a gas field 1 is introduced into an acid gas removal unit 2, in this particular case including an amine unit 21 as mentioned before. The amine unit 21 is operated as generally known in the art, in the present example using a steam stream b which is used to heat a reboiler in the amine unit 21 (not shown). A steam stream c of a lower temperature or a condensate stream c can be formed.

A sweetened gas stream d is withdrawn from the acid gas removal unit 2 and optionally subjected to further treatment 3, providing a further treated gas stream e which can e.g. fed into a gas pipeline. A sour gas stream f is also withdrawn from the acid gas removal unit 2 and is introduced into the oxidative process 4 which is embodied as a Claus process 4, or, more specifically, into a Claus furnace 41 in the Claus process 4. A part of the sour gas stream f can also be reinjected into the gas field 1, as indicated by a dotted arrow in Figure 1. A sulphur stream g is withdrawn from the Claus process 4 and is subjected to a sulphur product handling 5. From this, a sulphur product stream h is withdrawn or otherwise provided.

In a tail gas treatment unit 6, a tail gas stream i also withdrawn from the Claus process 4 is treated in a manner known per se. The tail gas treatment unit 6 provides a purified stack gas stream k with little or no sulphur compounds. Components from the tail gas treatment unit 6 can also, as illustrated with a dashed arrow, be reintroduced into the Claus process 4 or its Claus furnace 41. The tail gas treatment unit 6 may also comprise a unit operable by heat, e.g. an amine unit 61, wherein the heat is provided in the form of steam. However, other units besides amine units may be present as well, like preheating units heating the tail gas stream i to reaction temperature, etc. A steam stream b' is provided to this unit and a steam stream c' of a lower temperature or a condensate stream c can be formed. One or both of the amine unit 21 in the acid gas removal unit 2 and the unit 61 in the tail gas treatment unit 6 may be provided and/or one or both of them may be operated using steam.

The Claus process 4 is operated with oxygen-enrichment. Therefore, using an air separation unit 7, an oxygen or oxygen-enriched stream I is provided which is also introduced into the Claus process 4 or its furnace 41. The air separation unit 7, which also may provide a nitrogen or nitrogen-enriched stream and other products and to which air is supplied (not shown), comprises a compressor 71 operated with a steam driven turbine 72 receiving a steam stream m. The turbine 72 is mechanically coupled to the compressor 71. A steam stream n of a lower temperature or a condensate stream n can be formed. The steam or condensate streams c, n can be reused for steam production.

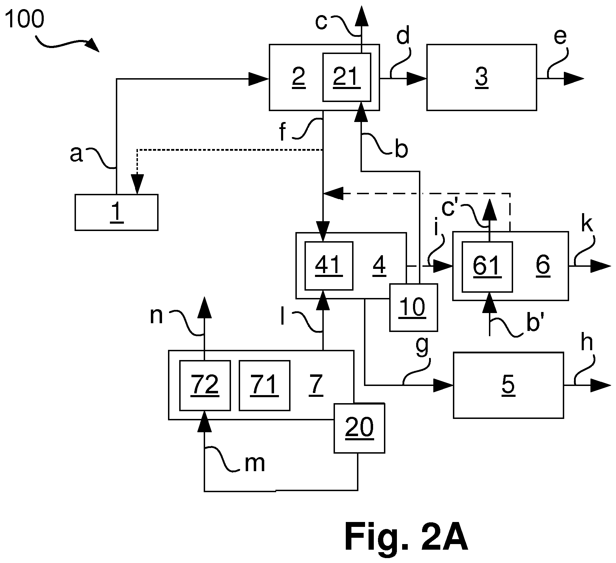

Figure 2A schematically illustrates a gas treatment method 100 including an oxidative process 4 providing waste heat according to an embodiment of the present invention in a first mode of operation.

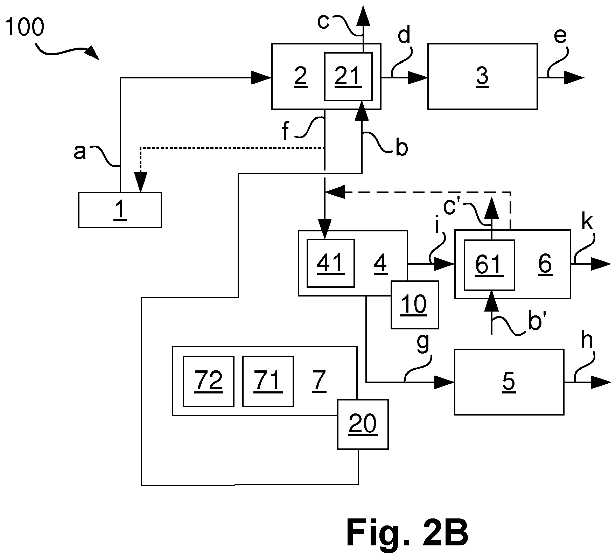

Additionally to Figure 1, a first steam generator 10 and a second steam generator 20 are shown in Figure 2A and 2B. The first steam generator 10 is shown in proximity to the Claus process 4 (but does not necessarily have to be located in proximity to the Claus process 4). It is operated using at least a part of the waste heat of the Claus process 4. The second steam generator 20 is shown in proximity to the air separation unit 7 (but does not necessarily have to be located in proximity to the air separation unit 7). It is operated independently from the waste heat of the Claus process 4.

In the first mode of operation shown in Figure 2A, the gas treatment unit 2, or, more precisely, the amine unit 21, and/or the tail gas treatment unit 6, or, more precisely, the unit 61, is operated using a first amount of steam, the first amount of steam being provided by the first steam generator 10 operated using at least a part of the waste heat of the Claus process 4. As shown in Figure 2A, the steam stream b is correspondingly provided by the first steam generator 10.

In the first mode of operation shown in Figure 2A, the compressor 71 of the air separation unit 7 is operated using a second amount of steam in the steam turbine 72 mechanically coupled to the compressor 71, the second amount of steam being provided by the second steam generator 20. As shown in Figure 2A, the steam stream m is correspondingly provided by the second steam generator 20.

In the second mode of operation shown in Figure 2B, at least a part of the first amount of steam provided by the first steam generator 10 in the first mode of operation as shown in Figure 2A, is instead provided by the second steam generator 20 (see steam stream b, wherein this is also possible for steam stream b' but not shown for reasons of clarity). No steam is provided by the first steam generator 10. No steam is, furthermore, provided to the steam turbine 72 mechanically coupled to the compressor 71 of the air separation unit 7 and the air separation unit 7 is not in operation.

The heat recovered from the Claus Claus process 4 is typically from two different sources. The heat recovered from the Claus furnace 41 can be high pressure steam (HP steam). This can be up to 45 barg and is suitable for re-heating of the acid gas before entering the catalytic reactors and for driving turbines (it can also be superheated in the stack from the incinerator). Low pressure steam (LP steam) is generated in the sulphur condensers; this can be used to reboil the solvent in the amine unit(s) but is not suitable for driving turbines.

## Claims

1. A gas treatment method (100) including an oxidative process (4) providing waste heat, wherein a first gas mixture containing an oxidable component is provided, wherein the first gas mixture and oxygen are introduced into a oxidating unit (41), wherein at least a part of the oxidable component in the first gas mixture is oxidised in the oxidating unit (41), wherein the first gas mixture and/or a second gas mixture used in providing the first gas mixture and/or a third gas mixture produced from at least a part of the first gas mixture using the oxidating unit (41) is or are treated in one or more gas treatment units (2) operated using a first amount of steam, **characterized by** a first mode of operation and a second mode of operation,
- the second mode of operation being a start-up mode and the first mode of operation being a regular mode of operation performed in a time period after the second mode of operation,
- the oxidative process (4) providing waste heat being in operation and providing waste heat in a first waste heat amount in the first mode of operation and the oxidative process (4) being not in operation or being in operation and providing waste heat in a second waste heat amount smaller than the first waste heat amount in the second mode of operation,
- in the first mode of operation the oxygen introduced into the oxidating unit (41) being at least in part provided in the form of oxygen contained in an air separation product by an air separation unit (7), the air separation product being pure oxygen or a mixture of components enriched in oxygen as compared to atmospheric air,
- a first amount of the air separation product being produced by the air separation unit (7) in the first mode of operation, and a second amount of the air separation product smaller than the first amount of the air separation product or none of the air separation product being produced by the air separation unit (7) in the second mode of operation,
- the air separation unit (7) comprising a compressor (71) operated using a second amount of steam being expanded in a steam turbine (72) mechanically coupled to the compressor (71),
- in the first mode of operation the first amount of steam being provided by a first steam generator (10) operated using at least a part of the waste heat, and in the first mode of operation the second amount of steam being provided by a second steam generator (20) independently operable from the waste heat, and
- in the second mode of operation at least a part of the first amount of steam provided by the first steam generator (10) in the first mode of operation is instead provided by the second steam generator (20).

2. A gas treatment method (100) according to claim 1, wherein the first gas mixture is a sour gas mixture, wherein the oxidable component is hydrogen sulphide, wherein the oxidative process (4) is a Claus process, wherein the oxidating unit (41) is a Claus furnace, and wherein a part of the hydrogen sulphide in the sour gas mixture is oxidized by combustion in the Claus furnace.

3. A method (100) according to claim 2, wherein a third amount smaller than the first amount of the air separation product is introduced into the Claus furnace (41) in the first mode of operation, and wherein a fourth amount of the air separation product is stored in the first mode of operation and is at least in part introduced into the Claus furnace (41) in the second mode of operation.

4. A method (100) according to any one of the preceding claims, wherein the third gas mixture produced from at least a part of the first gas mixture using the oxidating unit (41) is treated in one of the gas treatment units, wherein the gas treatment unit is a tail gas treatment unit (6), and wherein the tail gas treatment unit (6) is operated using the first amount of steam or a part thereof.

5. A method (100) according to any one of the preceding claims, wherein the second gas mixture used in providing the first gas mixture and/or the third gas mixture produced from at least a part of the first gas mixture is treated in the or one of the gas treatment units (2, 6), wherein the second and/or third gas mixture is a gas mixture containing hydrogen sulphide and carbon dioxide, wherein the gas treatment unit or the one of the gas treatment units (2, 6) comprises an amine unit (21, 61), wherein in the amine unit (21, 62) hydrogen sulphide and carbon dioxide are at least partially eliminated from the second and/or third gas mixture using an amine solution forming an amine solution loaded with hydrogen sulphide and carbon dioxide, and wherein the hydrogen sulphide and the carbon dioxide are at least in part stripped from the loaded amine solution using heat from the first amount of steam or a part thereof.

6. Apparatus for performing a gas treatment method (100) including an oxidative process (4) providing waste heat, comprising means adapted to provide a first gas mixture containing an oxidable component, an oxidating unit (41) adapted to oxidise at least a part of the oxidable component in the first gas mixture, means adapted to introduce the first gas mixture and oxygen into the oxidating unit (41), one or more gas treatment units (2) adapted to treat, using a first amount of steam, the first gas mixture and/or a second gas mixture used in providing the first gas mixture and/or a third gas mixture produced from at least a part of the first gas mixture using the oxidating unit (41), **characterized in that** the apparatus is adapted to perform a first mode of operation and a second mode of operation,
- the second mode of operation being a start-up mode and the first mode of operation being a regular mode of operation performed in a time period after the second mode of operation,
- the oxidative process (4) providing waste heat being in operation and providing waste heat in a first waste heat amount in the first mode of operation and the oxidative process (4) being not in operation or being in operation and providing waste heat in a second waste heat amount smaller than the first waste heat amount in the second mode of operation,
- an air separation unit (7) being part of the apparatus and being adapted to provide in the first mode of operation at least a part of the oxygen introduced into the oxidating unit (41) in the form of oxygen contained in an air separation product, the air separation product being pure oxygen or a mixture of components enriched in oxygen as compared to atmospheric air,
- the air separation unit (7) being adapted to produce a first amount of the air separation product in the first mode of operation, and a second amount of the air separation product smaller than the first amount of the air separation product or none of the air separation product in the second mode of operation,
- the air separation unit comprising a compressor (71) adapted to be operated using a second amount of steam being expanded in a steam turbine (72) mechanically coupled to the compressor (71),
- a first steam generator (10) being adapted to be operated using at least a part of the waste heat and to provide the first amount of steam in the first mode of operation, and a second steam generator (20) independently operable from the waste heat and adapted to provide the second amount of steam in the first mode of operation, and
- in the second mode of operation at least a part of the first amount of steam provided by the first steam generator (10) in the first mode of operation instead being provided by the second steam generator (20).

7. Apparatus according to claim 6, wherein the first gas mixture is a sour gas mixture,
wherein the oxidable component is hydrogen sulphide, wherein the oxidative process (4) is a Claus process, wherein the oxidating unit (41) is a Claus furnace, and wherein a part of the hydrogen sulphide in the sour gas mixture is oxidized by combustion in the Claus furnace.

## Patentansprüche

1. Gasbehandlungsverfahren (100), das einen oxidativen Prozess (4) einschließt, der Abwärme bereitstellt, wobei ein erstes Gasgemisch, das eine oxidierbare Komponente enthält, bereitgestellt wird, wobei das erste Gasgemisch und Sauerstoff in eine Oxidationseinheit (41) eingeführt werden, wobei mindestens ein Teil der oxidierbaren Komponente in dem ersten Gasgemisch in der Oxidationseinheit (41) oxidiert wird, wobei das erste Gasgemisch und/oder ein zweites Gasgemisch, das zum Bereitstellen des ersten Gasgemischs verwendet wird, und/oder ein drittes Gasgemisch, das aus mindestens einem Teil des ersten Gasgemischs unter Verwendung der Oxidationseinheit (41) hergestellt wird, in einer oder mehreren Gasbehandlungseinheiten (2) behandelt wird oder werden, die unter Verwendung einer ersten Dampfmenge betrieben werden, **gekennzeichnet durch** einen ersten Betriebsmodus und einen zweiten Betriebsmodus,
- wobei der zweite Betriebsmodus ein Startmodus ist und der erste Betriebsmodus ein regulärer Betriebsmodus ist, der in einem Zeitraum nach dem zweiten Betriebsmodus durchgeführt wird,
- wobei der oxidative Prozess (4), der Abwärme bereitstellt, in Betrieb ist und Abwärme in einer ersten Abwärmemenge in dem ersten Betriebsmodus bereitstellt und der oxidative Prozess (4) nicht in Betrieb ist oder in Betrieb ist und Abwärme in einer zweiten Abwärmemenge bereitstellt, die kleiner als die erste Abwärmemenge in dem zweiten Betriebsmodus ist,
- wobei in dem ersten Betriebsmodus der Sauerstoff, der in die Oxidationseinheit (41) eingeführt wird, mindestens teilweise in der Form von Sauerstoff bereitgestellt ist, der in einem Luftzerlegungsprodukt durch eine Luftzerlegungseinheit (7) enthalten ist, wobei das Luftzerlegungsprodukt reiner Sauerstoff oder ein Gemisch von Komponenten ist, die verglichen mit atmosphärischer Luft mit Sauerstoff angereichert sind,
- wobei eine erste Menge des Luftzerlegungsprodukts durch die Luftzerlegungseinheit (7) in dem ersten Betriebsmodus erzeugt wird, und eine zweite Menge des Luftzerlegungsprodukts, die kleiner als die erste Menge des Luftzerlegungsprodukts ist, oder keines des Luftzerlegungsprodukts durch die Luftzerlegungseinheit (7) in dem zweiten Betriebsmodus erzeugt wird,
- die Luftzerlegungseinheit (7) umfassend einen Kompressor (71), der unter Verwendung einer zweiten Dampfmenge betrieben wird, die in einer Dampfturbine (72), die mechanisch mit dem Kompressor (71) gekoppelt ist, expandiert wird,
- wobei in dem ersten Betriebsmodus die erste Dampfmenge durch einen ersten Dampfgenerator (10) bereitgestellt wird, der unter Verwendung mindestens eines Teils der Abwärme betrieben wird, und in dem ersten Betriebsmodus die zweite Dampfmenge durch einen zweiten Dampfgenerator (20) bereitgestellt wird, der unabhängig von der Abwärme betreibbar ist, und
- wobei in dem zweiten Betriebsmodus mindestens ein Teil der ersten Dampfmenge, die durch den ersten Dampfgenerator (10) in dem ersten Betriebsmodus bereitgestellt wird, stattdessen durch den zweiten Dampfgenerator (20) bereitgestellt wird.

2. Gasbehandlungsverfahren (100) nach Anspruch 1, wobei das erste Gasgemisch ein saures Gasgemisch ist, wobei die oxidierbare Komponente Schwefelwasserstoff ist, wobei der oxidative Prozess (4) ein Claus-Prozess ist, wobei die Oxidationseinheit (41) ein Claus-Ofen ist, und wobei ein Teil des Schwefelwasserstoffs in dem sauren Gasgemisch durch Verbrennung in dem Claus-Ofen oxidiert wird.

3. Verfahren (100) nach Anspruch 2, wobei eine dritte Menge, die kleiner als die erste Menge des Luftzerlegungsprodukts ist, in dem ersten Betriebsmodus in den Claus-Ofen (41) eingeführt wird, und wobei eine vierte Menge des Luftzerlegungsprodukts in dem ersten Betriebsmodus gespeichert ist und mindestens teilweise in dem zweiten Betriebsmodus in den Claus-Ofen (41) eingeführt wird.

4. Verfahren (100) nach einem der vorstehenden Ansprüche, wobei das dritte Gasgemisch, das aus mindestens einem Teil des ersten Gasgemischs unter Verwendung der Oxidationseinheit (41) hergestellt wird, in einer der Gasbehandlungseinheiten behandelt wird, wobei die Gasbehandlungseinheit eine Endgasbehandlungseinheit (6) ist und wobei die Endgasbehandlungseinheit (6) unter Verwendung der ersten Dampfmenge oder eines Teils davon betrieben wird.

5. Verfahren (100) nach einem der vorstehenden Ansprüche, wobei das zweite Gasgemisch, das bei dem Bereitstellen des ersten Gasgemischs und/oder des dritten Gasgemischs verwendet wird, das aus mindestens einem Teil des ersten Gasgemischs hergestellt wird, in der oder einer der Gasbehandlungseinheiten (2, 6) behandelt wird, wobei das zweite und/oder dritte Gasgemisch ein Gasgemisch ist, das Schwefelwasserstoff und Kohlendioxid enthält, wobei die Gasbehandlungseinheit oder die eine der Gasbehandlungseinheiten (2, 6) eine Amineinheit (21, 61) umfasst, wobei in der Amineinheit (21, 62) Schwefelwasserstoff und Kohlendioxid unter Verwendung einer Aminlösung, die eine mit Schwefelwasserstoff und Kohlendioxid beladene Aminlösung ausbildet, mindestens teilweise aus dem zweiten und/oder dritten Gasgemisch entfernt werden, und wobei der Schwefelwasserstoff und das Kohlendioxid mindestens teilweise aus der beladenen Aminlösung unter Verwendung von Wärme aus der ersten Dampfmenge oder einem Teil davon gestrippt werden.

6. Vorrichtung zum Durchführen eines Gasbehandlungsverfahrens (100), das einen oxidativen Prozess (4) einschließt, der Abwärme bereitstellt, umfassend Mittel, die angepasst sind, um ein erstes Gasgemisch bereitzustellen, das eine oxidierbare Komponente enthält, eine Oxidationseinheit (41), die angepasst ist, um mindestens einen Teil der oxidierbaren Komponente in dem ersten Gasgemisch zu oxidieren, Mittel, die angepasst sind, um das erste Gasgemisch und den Sauerstoff in die Oxidationseinheit (41) einzuführen, eine oder mehrere Gasbehandlungseinheiten (2), die angepasst sind, um unter Verwendung einer ersten Dampfmenge, das erste Gasgemisch und/oder ein zweites Gasgemisch, das zum Bereitstellen des ersten Gasgemischs verwendet wird, und/oder ein drittes Gasgemisch, das aus mindestens einem Teil des ersten Gasgemischs unter Verwendung der Oxidations-Einheit (41) hergestellt wird, zu behandeln, **dadurch gekennzeichnet, dass** die Vorrichtung angepasst ist, um einen ersten Betriebsmodus und einen zweiten Betriebsmodus durchzuführen, - wobei der zweite Betriebsmodus ein Startmodus ist und der erste Betriebsmodus ein regulärer Betriebsmodus ist, der in einem Zeitraum nach dem zweiten Betriebsmodus durchgeführt wird,
- wobei der oxidative Prozess (4), der Abwärme bereitstellt, in Betrieb ist und Abwärme in einer ersten Abwärmemenge in dem ersten Betriebsmodus bereitstellt und der oxidative Prozess (4) nicht in Betrieb ist oder in Betrieb ist und Abwärme in einer zweiten Abwärmemenge bereitstellt, die kleiner als die erste Abwärmemenge in dem zweiten Betriebsmodus ist,
- wobei eine Luftzerlegungseinheit (7) Teil der Vorrichtung ist und angepasst ist, um in dem ersten Betriebsmodus mindestens einen Teil des Sauerstoffs, der in die Oxidationseinheit (41) eingeführt wird, in der Form von Sauerstoff bereitzustellen, der in einem Luftzerlegungsprodukt enthalten ist, wobei das Luftzerlegungsprodukt reiner Sauerstoff oder ein Gemisch von Komponenten ist, die verglichen mit atmosphärischer Luft mit Sauerstoff angereichert sind,
- wobei die Luftzerlegungseinheit (7) angepasst ist, um eine erste Menge des Luftzerlegungsprodukts in dem ersten Betriebsmodus und eine zweite Menge des Luftzerlegungsprodukts, die kleiner als die erste Menge des Luftzerlegungsprodukts ist, oder keines des Luftzerlegungsprodukts in dem zweiten Betriebsmodus zu erzeugen,
- die Luftzerlegungseinheit, umfassend einen Kompressor (71), der angepasst ist, um unter Verwendung einer zweiten Dampfmenge betrieben zu werden, die in einer Dampfturbine (72), die mechanisch mit dem Kompressor (71) gekoppelt ist, expandiert wird,
- wobei ein erster Dampfgenerator (10) angepasst ist, um unter Verwendung mindestens eines Teils der Abwärme betrieben zu werden und um die erste Dampfmenge in dem ersten Betriebsmodus bereitzustellen, und wobei ein zweiter Dampfgenerator (20) unabhängig von der Abwärme betreibbar ist und angepasst ist, um die zweite Dampfmenge in dem ersten Betriebsmodus bereitzustellen, und
- wobei in dem zweiten Betriebsmodus mindestens ein Teil der ersten Dampfmenge, die durch den ersten Dampferzeuger (10) in dem ersten Betriebsmodus bereitgestellt wird, stattdessen durch den zweiten Dampferzeuger (20) bereitgestellt wird.

7. Vorrichtung nach Anspruch 6, wobei das erste Gasgemisch ein saures Gasgemsich ist, wobei die oxidierbare Komponente Schwefelwasserstoff ist, wobei der oxidative Prozess (4) ein Claus-Prozess ist, wobei die Oxidationseinheit (41) ein Claus-Ofen ist und wobei ein Teil des Schwefelwasserstoffs in dem sauren Gasgemsich durch Verbrennung in dem Claus-Ofen oxidiert wird.

## Revendications

1. Procédé de traitement de gaz (100) comportant un processus oxydatif (4) fournissant de la chaleur résiduelle, dans lequel un premier mélange gazeux contenant un composant oxydable est fourni, dans lequel le premier mélange gazeux et de l'oxygène sont introduits dans une unité d'oxydation (41), dans lequel au moins une partie du composant oxydable dans le premier mélange gazeux est oxydée dans l'unité d'oxydation (41), dans lequel le premier mélange gazeux et/ou un deuxième mélange gazeux utilisé dans la fourniture du premier mélange gazeux et/ou un troisième mélange gazeux produit à partir d'au moins une partie du premier mélange gazeux à l'aide de l'unité d'oxydation (41) est ou sont traités dans une ou plusieurs unités de traitement de gaz (2) mises en fonctionnement à l'aide d'une première quantité de vapeur, **caractérisé par** un premier mode de fonctionnement et un second mode de fonctionnement,
- le second mode de fonctionnement étant un mode de démarrage et le premier mode de fonctionnement étant un mode de fonctionnement normal mis en oeuvre au cours d'une période de temps après le second mode de fonctionnement,
- le processus oxydatif (4) fournissant de la chaleur résiduelle en fonctionnement et fournissant de la chaleur résiduelle en une première quantité de chaleur résiduelle dans le premier mode de fonctionnement et le processus oxydatif (4) n'étant pas en fonctionnement ou étant en fonctionnement et fournissant de la chaleur résiduelle en une second quantité de chaleur résiduelle plus petite que la première quantité de chaleur résiduelle dans le second mode de fonctionnement,
- dans le premier mode de fonctionnement l'oxygène introduit dans l'unité d'oxydation (41) étant au moins en partie fourni sous la forme d'oxygène contenu dans un produit de séparation d'air par une unité de séparation d'air (7), le produit de séparation d'air étant de l'oxygène pur ou un mélange de composants enrichis en oxygène par comparaison avec de l'air atmosphérique,
- une première quantité du produit de séparation d'air étant produite par l'unité de séparation d'air (7) dans le premier mode de fonctionnement, et une seconde quantité du produit de séparation d'air plus petite que la première quantité du produit de séparation d'air ou une quantité nulle du produit de séparation d'air étant produite par l'unité de séparation d'air (7) dans le second mode de fonctionnement,
- l'unité de séparation d'air (7) comprenant un compresseur (71) mis en fonctionnement à l'aide d'une seconde quantité de vapeur étant détendue dans une turbine à vapeur (72) accouplée mécaniquement au compresseur (71),
- dans le premier mode de fonctionnement la première quantité de vapeur étant fournie par un premier générateur de vapeur (10) mis en fonctionnement à l'aide d'au moins une partie de la chaleur résiduelle, et dans le premier mode de fonctionnement la seconde quantité de vapeur étant fournie par un second générateur de vapeur (20) pouvant être mis en fonctionnement indépendamment de la chaleur résiduelle, et
- dans le second mode de fonctionnement au moins une partie de la première quantité de vapeur fournie par le premier générateur de vapeur (10) dans le premier mode de fonctionnement est à la place fournie par le second générateur de vapeur (20).

2. Procédé de traitement de gaz (100) selon la revendication 1, dans lequel le premier mélange gazeux est un mélange gazeux acide, dans lequel le composant oxydable est du sulfure d'hydrogène, dans lequel le processus oxydatif (4) est un processus Claus, dans lequel l'unité d'oxydation (41) est un four Claus, et dans lequel une partie du sulfure d'hydrogène dans le mélange gazeux acide est oxydée par combustion dans le four Claus.

3. Procédé (100) selon la revendication 2, dans lequel une troisième quantité plus petite que la première quantité du produit de séparation d'air est introduite dans le four Claus (41) dans le premier mode de fonctionnement, et dans lequel une quatrième quantité du produit de séparation d'air est stockée dans le premier mode de fonctionnement et est au moins en partie introduite dans le four Claus (41) dans le second mode de fonctionnement.

4. Procédé (100) selon l'une quelconque des revendications précédentes, dans lequel le troisième mélange gazeux produit à partir d'au moins une partie du premier mélange gazeux à l'aide de l'unité d'oxydation (41) est traité dans l'une des unités de traitement de gaz, dans lequel l'unité de traitement de gaz est une unité de traitement de gaz résiduaire (6), et dans lequel l'unité de traitement de gaz résiduaire (6) est mise en fonctionnement à l'aide de la première quantité de vapeur ou d'une partie de celle-ci.

5. Procédé (100) selon l'une quelconque des revendications précédentes, dans lequel le deuxième mélange gazeux utilisé dans la fourniture du premier mélange gazeux et/ou du troisième mélange gazeux produit à partir d'au moins une partie du premier mélange gazeux est traité dans la ou dans l'une des unités de traitement de gaz (2, 6), dans lequel le deuxième et/ou le troisième mélange gazeux est un mélange gazeux contenant du sulfure d'hydrogène et du dioxyde de carbone, dans lequel l'unité de traitement de gaz ou l'une des unités de traitement de gaz (2, 6) comprend une unité d'amine (21, 61), dans lequel dans l'unité d'amine (21, 62) le sulfure d'hydrogène et le dioxyde de carbone sont au moins partiellement éliminés du deuxième et/ou du troisième mélange gazeux à l'aide d'une solution d'amine formant une solution d'amine chargée en sulfure d'hydrogène et en dioxyde de carbone, et dans lequel le sulfure d'hydrogène et le dioxyde de carbone sont au moins en partie retirés de la solution d'amine chargée à l'aide de la chaleur provenant de la première quantité de vapeur ou d'une partie de celle-ci.

6. Appareil permettant de mettre en oeuvre un procédé de traitement de gaz (100) comportant un processus oxydatif (4) fournissant de la chaleur résiduelle, comprenant un moyen conçu pour fournir un premier mélange gazeux contenant un composant oxydable, une unité d'oxydation (41) conçue pour oxyder au moins une partie du composant oxydable dans le premier mélange gazeux, un moyen conçu pour introduire le premier mélange gazeux et de l'oxygène dans l'unité d'oxydation (41), une ou plusieurs unités de traitement de gaz (2) conçues pour traiter, à l'aide d'une première quantité de vapeur, le premier mélange gazeux et/ou un deuxième mélange gazeux utilisé dans la fourniture du premier mélange gazeux et/ou un troisième mélange gazeux produit à partir d'au moins une partie du premier mélange gazeux à l'aide de l'unité d'oxydation (41), **caractérisé en ce que** l'appareil est conçu pour mettre en oeuvre un premier mode de fonctionnement et un second mode de fonctionnement,
- le second mode de fonctionnement étant un mode de démarrage et le premier mode de fonctionnement étant un mode de fonctionnement normal mis en oeuvre au cours d'une période de temps après le second mode de fonctionnement,
- le processus oxydatif (4) fournissant de la chaleur résiduelle en fonctionnement et fournissant de la chaleur résiduelle en une première quantité de chaleur résiduelle dans le premier mode de fonctionnement et le processus oxydatif (4) n'étant pas en fonctionnement ou étant en fonctionnement et fournissant de la chaleur résiduelle en une second quantité de chaleur résiduelle plus petite que la première quantité de chaleur résiduelle dans le second mode de fonctionnement,
- une unité de séparation d'air (7) faisant partie de l'appareil et étant conçue pour fournir dans le premier mode de fonctionnement au moins une partie de l'oxygène introduit dans l'unité d'oxydation (41) sous la forme d'oxygène contenu dans un produit de séparation d'air, le produit de séparation d'air étant de l'oxygène pur ou un mélange de composants enrichis en oxygène par comparaison avec de l'air atmosphérique,
- l'unité de séparation d'air (7) étant conçue pour produire une première quantité du produit de séparation d'air dans le premier mode de fonctionnement, et une seconde quantité du produit de séparation d'air plus petite que la première quantité du produit de séparation d'air ou une quantité nulle du produit de séparation d'air dans le second mode de fonctionnement,
- l'unité de séparation d'air comprenant un compresseur (71) conçu pour être mis en fonctionnement à l'aide d'une seconde quantité de vapeur étant détendue dans une turbine à vapeur (72) accouplée mécaniquement au compresseur (71),
- un premier générateur de vapeur (10) étant conçu pour être mis en fonctionnement à l'aide d'au moins une partie de la chaleur résiduelle et pour fournir la première quantité de vapeur dans le premier mode de fonctionnement, et un second générateur de vapeur (20) pouvant être mis en fonctionnement indépendamment de la chaleur résiduelle et conçu pour fournir la seconde quantité de vapeur dans le premier mode de fonctionnement, et
- dans le second mode de fonctionnement au moins une partie de la première quantité de vapeur fournie par le premier générateur de vapeur (10) dans le premier mode de fonctionnement étant à la place fournie par le second générateur de vapeur (20).

7. Appareil selon la revendication 6, dans lequel le premier mélange gazeux est un mélange gazeux acide, dans lequel le composant oxydable est du sulfure d'hydrogène, dans lequel le processus oxydatif (4) est un processus Claus, dans lequel l'unité d'oxydation (41) est un four Claus, et dans lequel une partie du sulfure d'hydrogène dans le mélange gazeux acide est oxydée par combustion dans le four Claus.
